**Europäisches Patentamt**

**European Patent Office**

**Office européen des brevets**

(19)

(11) Veröffentlichungsnummer: **0 236 378**
**B1**

(12) **EUROPÄISCHE PATENTSCHRIFT**

(45) Veröffentlichungstag der Patentschrift: **18.07.90**

(21) Anmeldenummer: **86905215.9**

(22) Anmeldetag: **10.09.86**

(86) Internationale Anmeldenummer:
**PCT/DE86/00361**

(87) Internationale Veröffentlichungsnummer:
**WO 87/01889 26.03.87 Gazette 87/07**

(51) Int. Cl.⁵: $H\ 04\ B\ 10/02$, $G\ 08\ C\ 23/00$

(54) **VERFAHREN ZUR AUSWERTUNG VON IMPULSEN ELEKTROMAGNETISCHER STRAHLUNG.**

(30) Priorität: **11.09.85 DE 3532802**

(43) Veröffentlichungstag der Anmeldung:
**16.09.87 Patentblatt 87/38**

(45) Bekanntmachung des Hinweises auf die
Patenterteilung:
**18.07.90 Patentblatt 90/29**

(84) Benannte Vertragsstaaten:
**BE FR IT**

(56) Entgegenhaltungen:
**DE-A-2 554 637**
**US-A-4 377 006**

**IEEE Transactions on Nuclear Science, Vol.
NS-18, No. 3, June 1971, New York (US). L.L.
Reginato et al.: "PCM telemetry system for
3-MV superhilac injector", pages 387, 388, see
page 387, left column, lines 1 to 27, figure 1**

(73) Patentinhaber: **VISOLUX-ELEKTRONIK
RICHARD SIERING GMBH
Gitschiner Strasse 61
D-1000 Berlin 61 (DE)**

(72) Erfinder: **ILLNER, Peter
Ulmenallee 20a
D-1000 Berlin 19 (DE)**

(74) Vertreter: **Presting, Hans-Joachim et al
Herbertstrasse 22
D-1000 Berlin 33 (DE)**

Courier Press, Leamington Spa, England.

EP 0 236 378 B1

**Beschreibung**

Die Erfindung betrifft ein Verfahren zur Auswertung von Impulsen elektromagnetischer Strahlung im Bereich von 0,5 bis 1,0 μm mittels einer photoelektrischen Auswerteschaltung, die einen von einer Halbleiterdiode gebildeten Lichtsender und einen diesem eng benachbarten gleichfalls von einer Halbleiterdiode gebildeten Lichtempfänger aufweist, wobei letzterer von vom Lichtsender ausgehenden Lichtimpulsen angesteuert wird und das von ihm empfangene Signal abgefragt wird.

Ein derartiges Verfahren wird beispielsweise bei photoelektrischen Auswerteschaltungen angewendet, bei denen als Licht-Sender-Empfänger eine Reflexlichtschranke oder ein Lichttaster nach DIN 44030 vorgesehen ist.

Für die Übertragung von Befehlen wird heute vielfach elektromagnetische Strahlung im Bereich von 0,5 bis 1,0 μm angewendet. Um eine genügende Abgrenzung gegen elektrische Störsignale zu erreichen, wird dabei entweder mit modulierten Signalen gearbeitet, oder es werden Synchronschaltungen angewendet, die den Empfänger nur für die Zeitdauer der Sendesignale empfangsbereit machen. Auch die sinngemäße Kombination beider Verfahren ist bekannt. Geht man davon aus, daß Übertragungsrate und Störabstand in einem Verhältnis zueinander stehen, d.h. daß ein größerer Störabstand mit entsprechend größeren Sendepausen eine kleinere Übertragungsrate bedingt, andererseits bei räumlich dicht nebeneinander angeordnetem Sender und Empfänger die Schwierigkeiten bei der Ausschaltung von elektrischen Störsignalen, verursacht durch die Ansteuerung des Senders, insbesondere bei großen Sendeleistungen, erheblich ansteigen, und untersucht man daraufhin die z.Z. auf dem Markt erhältlichen Geräte, so liegt die untere Grenze für die Übertragungsrate bei ca. 0,2 Millisekunden, wobei Lichtleiteranwendungen (Pulscodemodulation) nicht in den Betrachtungsbereich fallen.

Bei einem durch die DE-A-2 544 637 bekannten Verfahren zur Fernsteuerung durch Infrarotlicht-Übertragung, bei dem von einem optischen Sender ein die Steuerinformation enthaltendes optisches Signal in einem zu steuernden Gerät übertragen wird, tritt das Problem der Übertragung von Störimpulsen vom Sender auf den Empfänger nicht auf, weil die Enfernung zwischen beiden ausreichend groß ist.

Der Erfindung liegt die Aufgabe zugrunde, ein Verfahren der gattungsgemäßen Art so auszubilden, daß durch Ausschaltung von durch die Ansteuerung des Senders verursachten Störsignalen der oben genannte Grenzwert für die Übertragungsrate von ca. 0,2 Millisekunden mindestens um den Faktor 10 gesenkt wird.

Diese Aufgabe wird erfindungsgemäß dadurch gelöst, daß die Abfrage des empfangenen Signals zu einem Zeitpunkt erfolgt, zu dem der Sender bereits abgeschaltet ist.

Die Erfindung basiert auf der Erkenntnis, daß sich die Eigenschaft an sich bekannter Empfangsdioden, einen aus einem Lichtsignal resultierenden Photostrom zeitlich verzögert auftreten zu lassen, dazu nutzen läßt, eine Trennung zwischen optischen und elektrischen Signalen, die gleichzeitig entstehend, zu erreichen.

Die mit der Erfindung erzielten Vorteile bestehen im wesentlichen darin, daß mit dem Verfahren auf einfache Weise, d.h. ohne Aufwand für eine Abschirmung zwischen Sender und Empfänger eine erhebliche Senkung der unteren Grenze für die Übertragungsrate erreicht wird.

**Patentanspruch**

Verfahren zur Auswertung von Impulsen elektromagnetischer Strahlung im Bereich von 0,5 bis 1,0 μm mittels einer photoelektrischen Auswerteschaltung, die einen von einer Halbleiterdiode gebildeten Lichtsender und einen diesem eng benachbarten, gleichfalls von einer Halbleiterdiode gebildeten Lichtempfänger aufweist, wobei letzterer von vom Lichtsender ausgehenden Lichtimpulsen angesteuert wird und das von ihm empfangene Signal abgefragt wird,
dadurch gekennzeichnet,
daß die Abfrage des empfangenen Signals zu einem Zeitpunkt erfolgt, zu dem der Sender bereits abgeschaltet ist.

**Revendication**

Procédé pour analyser des impulsions de rayonnements électromagnétiques dans le domaine de 0,5 à 1,0 μm au moyen d'un montage d'analyse photoélectrique, qui comporte un émetteur de lumière formé par une diode semi-conductrice et un récepteur de lumière, étroitement voisin de celui-ci, formé également par une diode semi-conductrice, ce dernier étant commandé par des impulsions lumineuses issues de l'émetteur de lumière, et le signal reçu par lui étant interrogé,
· caractérisé en ce que l'interrogation du signal reçu a lieu à un instant, auquel l'émetteur est déjà mis hors circuit.

**Claim**

A method for evaluating pulses of electromagnetic radiation in the range of 0.5 to 1.0 μm by means of a photoelctric evaluating circuit comprising an optical transmitter constituted by a semiconductor diode and an optical receiver adjacent to the former and likewise constituted by a semiconductor diode, the latter being driven by optical pulses from the optical transmitter and scanning (interrogating) the signal received by it, characterized in that scanning of said signal received is carried out at a point in time when the transmitter has already been switched off.